# FASCICULE DE BREVET EUROPEEN

(11) **EP 3 104 963 B1**
(45) Date de publication et mention de la délivrance du brevet: **26.04.2023**
(21) Numéro de dépôt: 15709748.6
(22) Date de dépôt: 12.02.2015
(51) Int. Cl.: B01D 65/02

(54) **PROCEDE D'EXPLOITATION D'UNE INSTALLATION DE TRAITEMENT D'EAU, ET INSTALLATION POUR LA MISE EN OEUVRE DU PROCEDE**
VERFAHREN ZUM BETRIEB EINER WASSERBEHANDLUNGSANLAGE UND ANLAGE ZUR DURCHFÜHRUNG DES VERFAHRENS
METHOD FOR OPERATING A WATER TREATMENT PLANT AND PLANT FOR CARRYING OUT SAID METHOD

(30) Priorité: 14.02.2014 FR 1451165
(43) Date de publication de la demande: 21.12.2016
(73) Titulaire: Suez International, 92040 Paris la Défense Cedex (FR)
(72) Inventeur: DELAGARDE, Sébastien, F-94700 Maisons-Alfort (FR)
(74) Mandataire: IPAZ
(86) Numéro de dépôt international: PCT/IB2015/051053
(87) Numéro de publication internationale: WO 2015/121821

(56) Documents cités:
- WO-A1-2014/097179
- US-A1- 2008 093 282
- US-A1- 2012 061 300
- US-B1- 6 190 556

## Description

L'invention est relative à un procédé d'exploitation d'une installation de traitement d'eau, en particulier pour dessalement d'eau de mer, tel que défini dans les revendications. Il s'agit d'une installation du genre de celles qui comprennent
- au moins une unité à membrane pour filtration par osmose inverse ou par nanofiltration, avec une conduite d'arrivée d'eau à traiter, au moins une conduite de sortie pour le perméat, et une conduite de rejet pour le concentrat,
- au moins une pompe haute pression sur la conduite d'arrivée,
- un système de récupération d'énergie comportant une première entrée d'eau à traiter, une première sortie d'eau à traiter pressurisée reliée, avec une pompe de recirculation, à la conduite d'arrivée en aval de la pompe haute pression, une deuxième entrée reliée à la conduite de rejet et une deuxième sortie reliée à une conduite d'évacuation,
- un circuit de solution de nettoyage,
- et un ensemble de vannes pour commander les opérations de filtration et les opérations de nettoyage,
le débit de solution de nettoyage passant dans l'unité à membrane devant être au moins égal à une valeur Q prescrite.

L'invention concerne le nettoyage en place des membranes d'osmose inverse ou de nanofiltration, nettoyage désigné en abrégé par CIP (Cleaning In Place).

Un tel système est divulgué dans US2012061300.

Dans les installations d'osmose inverse, pour compenser l'encrassement d'origine biologique (*biofouling*), ou produit par des précipitations ou des dépôts sur les membranes, il est nécessaire de nettoyer périodiquement ces membranes pour leur permettre de récupérer leurs performances en éliminant les dépôts.

Pour ce faire, on utilise généralement un système de nettoyage en place CIP, qui permet de transférer une solution de nettoyage, préalablement préparée, dans l'unité où sont installées les membranes. Pour un nettoyage efficace, les fournisseurs de membranes recommandent un débit de solution de nettoyage au moins égal à Q, notamment de 6 à 9 m³/h par tube de pression.

Un tel débit de solution de nettoyage est en principe supérieur au débit acceptable par la pompe haute pression et/ou par le système de récupération d'énergie. Ainsi, la solution de nettoyage est introduite, de manière générale, dans la zone haute pression, en aval de la pompe haute pression, en amont des membranes, et est récupérée dans la partie haute pression, en aval des membranes.

Les risques de fuite de la partie haute pression vers le système de nettoyage qui se trouve à basse pression, nécessitent la mise en oeuvre de solutions de protection pour limiter les dangers. Les dispositions existantes nécessitent la présence de deux vannes d'isolement haute pression, qui représentent un coût important. Le prix des vannes haute pression intervient de manière significative dans le coût final d'une installation de filtration par osmose inverse, ou par nanofiltration.

De plus, le système de nettoyage CIP est dimensionné pour la totalité du débit de nettoyage nécessaire. En conséquence, le diamètre des tuyauteries est relativement grand, ce qui entraîne, du fait du volume des tuyauteries, une surconsommation de produits chimiques et impose une augmentation de la taille des éventuels bacs de préparation et des systèmes de neutralisation. L'invention a pour but, surtout, de fournir un procédé d'exploitation pour une installation de traitement d'eau, telle que définie précédemment, qui permet d'en diminuer le coût de revient, notamment en réduisant le nombre de vannes haute pression.

Selon l'invention, le procédé d'exploitation d'une installation de traitement d'eau, en particulier pour dessalement d'eau de mer, telle que définie précédemment, comprend les caractéristiques suivantes :
- la solution de nettoyage est injectée en amont de la pompe haute pression selon un débit Q1 inférieur à la valeur prescrite Q,
- au moins le complément de débit de solution de nettoyage Q-Q1 est assuré par une recirculation de la solution sortant par la conduite de rejet de l'unité à membrane et traversant le système de récupération d'énergie,
la pompe haute pression étant à l'arrêt lors du nettoyage.

La pression d'alimentation de la solution de nettoyage provient d'un dispositif d'alimentation en solution de nettoyage.

Le dispositif d'alimentation en solution de nettoyage est adapté pour assurer le débit d'injection Q1 par le circuit de solution de nettoyage.

Le dispositif d'alimentation en solution de nettoyage peut par exemple comprendre une pompe, laquelle pompe est adaptée pour générer le débit Q1 de solution de nettoyage, la pompe haute pression étant à l'arrêt lors du nettoyage.

Bien entendu, la valeur prescrite Q correspond à la valeur prescrite pour un nettoyage de ladite au moins une unité à membrane.

Lorsque la pompe haute pression est à l'arrêt lors du nettoyage, elle est assimilable à une canalisation. La perte de charge d'une pompe haute pression à l'arrêt est très inférieure à celle d'une pompe haute pression en marche. Ainsi, l'étape de nettoyage comprend l'injection de la solution de nettoyage, une recirculation de cette solution.

La solution de nettoyage est injectée selon un débit Q1 inférieur à 0.5 Q.

Selon une première possibilité, pendant l'opération de nettoyage, le système de récupération d'énergie est maintenu à l'arrêt, et une fraction du débit sortant par la conduite de rejet est soutirée par une conduite, munie d'une vanne haute pression, branchée sur la conduite de rejet de l'unité à membrane.

Selon une autre possibilité, pendant l'opération de nettoyage, le système de récupération d'énergie fonctionne et reçoit, par une conduite sur sa première entrée, un débit de solution de nettoyage, et fournit dans une conduite reliée à sa deuxième sortie un débit identique, une fraction du débit sortant par la conduite de rejet étant soutirée par une conduite de soutirage, munie d'une vanne haute pression, branchée sur la conduite de rejet de l'unité à membrane, et la conduite de la deuxième sortie du système de récupération d'énergie est reliée par une conduite munie d'une vanne à ladite conduite de soutirage, en aval de la vanne haute pression.

Selon encore une autre possibilité, pendant l'opération de nettoyage le système de récupération d'énergie fonctionne et reçoit, sur sa première entrée, un débit de solution de nettoyage, et fournit sur sa deuxième sortie un débit identique, et la pression de solution de nettoyage délivrée par le dispositif d'alimentation est ajustée pour que le débit de solution sortant par la conduite reliée à la sortie perméat de l'unité à membrane soit sensiblement égal au débit de solution de nettoyage injecté par le dispositif d'alimentation , le débit de solution sortant par la conduite de rejet de l'unité à membrane étant entièrement délivré à la deuxième entrée du système de récupération d'énergie.

L'invention est également relative à une installation de traitement d'eau, en particulier pour dessalement d'eau de mer, pour la mise en oeuvre du procédé défini précédemment, comprenant les caractéristiques suivantes:
- le circuit de solution de nettoyage comprend un dispositif d'alimentation en solution de nettoyage, une conduite d'amenée reliée en amont de la pompe haute pression, et équipée d'une vanne basse pression,
- une première conduite d'évacuation de solution de nettoyage reliée à la conduite de sortie pour le perméat, et équipée d'une vanne basse pression,
- une conduite de soutirage reliée à la conduite de rejet pour le soutirage d'une fraction de solution, cette conduite de soutirage étant équipée d'une vanne haute pression.

Bien entendu, l'installation de traitement d'eau comprend au moins une unité à membrane.

La conduite d'amenée peut être agencée pour transférer la solution de nettoyage à l'unité à membrane.

La conduite d'amenée peut être reliée en amont de la pompe haute pression.

Le circuit de solution de nettoyage peut comprendre une conduite de liaison, munie d'une vanne basse pression, entre la conduite reliée à la première sortie du système de récupération d'énergie et la conduite de soutirage, en aval de la vanne haute pression.

Le dispositif d'alimentation en solution peut être prévu pour permettre d'ajuster la pression de solution à l'entrée de l'unité à membrane à une valeur telle que le débit de solution sortant par la conduite reliée à la sortie perméat de l'unité à membrane soit sensiblement égal au débit de solution de nettoyage injecté en amont de la pompe, le débit de solution sortant par le rejet de l'unité à membrane étant entièrement délivré à la deuxième entrée du système de récupération d'énergie.

Le dispositif d'alimentation en solution peut comprendre des moyens d'ajustement de la pression de solution à l'entrée de l'unité à membrane à une valeur telle que le débit de solution sortant par la conduite reliée à la sortie perméat de l'unité à membrane soit sensiblement égal au débit de solution de nettoyage injecté en amont de la pompe.

Ces moyens d'ajustement peuvent par exemple comprendre :
- un capteur de débit de solution sortant par la conduite reliée à la sortie perméat pour fournir un débit au niveau de la sortie perméat de l'unité à membrane,
- un comparateur de débit pour fournir une différence de débit entre le débit de solution de nettoyage injecté en amont de la pompe et le débit fournit par le capteur de débit de solution sortant par la conduite reliée à la sortie perméat,
- un actuateur pour ajuster le débit de solution de nettoyage injecté en amont de la pompe de sorte que la différence de débit soit nulle.

L'invention consiste, mises à part les dispositions exposées ci-dessus, en un certain nombre d'autres dispositions dont il sera plus explicitement question ci-après à propos d'exemples de réalisation décrits avec référence aux dessins annexés. Sur ces dessins :
Fig. 1 est un schéma d'une installation de dessalement d'eau de mer pour la mise en oeuvre du procédé de l'invention.
Fig. 2 est un schéma d'une variante de réalisation de l'installation de Fig. 1, et
Fig. 3 est un schéma d'une autre variante de réalisation de l'installation.

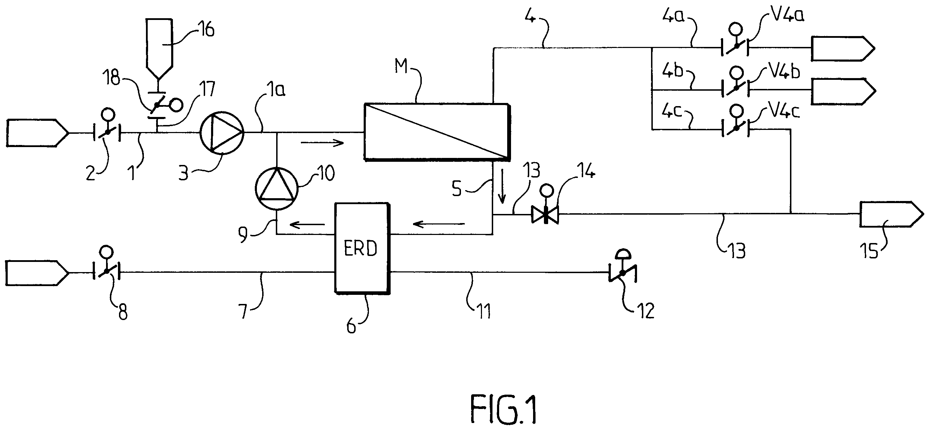

En se reportant à Fig. 1 des dessins, on peut voir une installation de traitement d'eau, pour dessalement d'eau de mer, comprenant au moins une unité M à membrane pour filtration par osmose inverse. En général, plusieurs unités M sont disposées en parallèle et alimentées à partir d'une même conduite 1 d'arrivée d'eau à traiter. La conduite 1 est équipée, en amont, d'une vanne 2 basse pression. Une pompe haute pression 3 est installée sur la conduite 1, en aval de la vanne 2, pour porter l'eau à traiter à une pression supérieure à la pression osmotique.

Par pompe haute pression, on désigne une pompe qui délivre en sortie un liquide sous une pression supérieure à 25 bars, pouvant atteindre 80 bars et plus. Par l'expression "vanne basse pression", on désigne une vanne pour liquides dont la pression est inférieure à 10 bars, et par « vanne haute pression » une vanne pour liquides dont la pression est supérieure à 10 bars, généralement supérieure à 25 bars.

La sortie de la pompe 3 est reliée à l'entrée de l'unité à membrane M par un prolongement 1a de la conduite 1. La sortie perméat de l'unité M est reliée à une conduite de sortie 4 pour le perméat dont la pression est relativement faible. Le concentrat, sortant de l'unité M, est évacué par une conduite de rejet 5 sous une pression élevée, inférieure de quelques bars seulement par rapport à la pression d'entrée dans la membrane.

L'installation comporte un système 6 de récupération d'énergie désigné en abrégé par ERD qui comporte une première entrée à laquelle est reliée une conduite 7 pour l'admission d'eau à traiter. Cette conduite est équipée, en amont, d'une vanne 8 basse pression. Le système 6 comporte une première sortie d'eau à traiter pressurisée à laquelle est raccordée une conduite 9 reliée à la conduite 1a, en aval de la pompe haute pression 3. La conduite 9 est équipée d'une pompe 10 de recirculation, propre à augmenter la pression du liquide sortant du système 6 pour la porter au niveau de la pression en sortie de la pompe 3. Le système de récupération d'énergie 6 comporte une deuxième entrée reliée à la conduite de rejet 5 et une deuxième sortie reliée à une conduite 11 d'évacuation de l'eau concentrée. Cette conduite 11 est équipée d'une vanne 12 basse pression.

Une conduite de soutirage 13 est branchée sur la conduite 5 et est munie d'une vanne 14 haute pression. En aval de la vanne 14, la conduite 13 se poursuit vers une évacuation 15 du rejet.

La conduite 4 se ramifie, en aval de l'unité M, en plusieurs branches 4a, 4b, 4c en parallèle. La branche 4a, munie d'une vanne basse pression V4a, sert à l'évacuation du filtrat de bonne qualité. La branche 4b est munie d'une vanne V4b et peut servir à une évacuation vers un réceptacle spécial d'une eau filtrée de moins bonne qualité. La branche 4c, munie d'une vanne basse pression V4c, est reliée à la conduite 13, en aval de la vanne 14.

Un circuit de nettoyage en place de l'unité à membrane M est prévu et compte un dispositif 16 d'alimentation en solution de nettoyage chimique permettant d'injecter, par une conduite 17 reliée à la conduite 1 en amont de la pompe 3, un débit de solution de nettoyage. La conduite 17 est équipée d'une vanne 18 basse pression.

Pour un nettoyage efficace de l'unité à membrane M, les fournisseurs de membranes prescrivent un débit Q m³/h de solution de nettoyage passant dans l'unité M. Le débit de solution de nettoyage est notamment de 6 à 9 m³/h par tube de pression. En général, la pompe haute pression 3 n'est pas prévue pour assurer le débit Q prescrit pour le nettoyage. En outre, il est préférable que pour l'opération de nettoyage, la pompe 3 ne soit pas en action. La traversée de la pompe crée une perte de charge d'autant plus élevée que le débit est élevé. Cette perte de charge peut atteindre 6 bars.

Selon le procédé de l'invention, le débit Q1 de solution de nettoyage injecté en amont de la pompe 3 dans la conduite 1 est inférieur à Q/2. Le complément de débit de solution de nettoyage est assuré par une recirculation de la solution de nettoyage sortant par la conduite 5 via le récupérateur d'énergie 6, la conduite 9, avec mise en mouvement par la pompe de recirculation 10.

Le débit maximum possible sur la boucle de recirculation 5, 6, 9 et 10 est limité par le débit que peut accepter le système ERD 6 et la conduite 9. La vanne haute pression 14 permet d'évacuer le débit excédentaire.

Le débit réduit Q1 en amont de la pompe 3 haute pression permet aussi de réduire le système de préparation de solution de nettoyage 16, 17, 18. Il en résulte que les tuyauteries du système de préparation de solution de nettoyage ont un plus petit diamètre que pour un débit égal à Q. Le volume de solution nécessaire pour le nettoyage est également réduit et, par là-même, une réduction du système de neutralisation des agents chimiques de la solution est obtenue.

A titre d'exemple numérique non limitatif, on considère le cas d'un traitement de 20 000 m³/jour, avec une unité de membrane M constituée de 210 tubes de pression. Le système de récupération d'énergie 6 est dimensionné pour 1200 m³/h, avec un débit de nettoyage Q prescrit à 1800 m³/h. Les différents débits peuvent être les suivants. Le débit Q1 de solution de nettoyage injecté par la conduite 17 est seulement de 600 m³/h, tandis que le débit recirculé par la conduite 5 et la pompe 10 est de 1200 m³/h.

Lors de l'opération de nettoyage, environ 10 % à 15 % du débit Q de solution de nettoyage traversent la membrane de filtration pour sortir par la conduite de perméat 4. Dans l'exemple considéré, le débit de solution évacué par la conduite 4 est de l'ordre de 200 m³/h. Ce débit est évacué par la branche 4c dont la vanne V4c est ouverte alors que les vannes V4a et V4b sont fermées. Lors d'une opération de nettoyage selon Fig. 1, les vannes 2, V4a, V4b, 8 et 12 sont fermées. Les vannes 18, 14 et V4c sont ouvertes.

La vanne 14 haute pression ouverte laisse passer un débit d'environ 400 m³/h. La somme du débit traversant la vanne V4c et la vanne 14 correspond à 600 m³/h, c'est-à-dire au débit injecté par le dispositif 16, 17 pour assurer le renouvellement de la solution.

Lors de l'opération de nettoyage, la pompe 3 est à l'arrêt, de même que le système récupérateur 6, aucun débit ne traversant les conduites 7 et 11. La pompe 10 fonctionne pour assurer la recirculation. Lors de cette opération de nettoyage, la vanne 14 n'est pas soumise à haute pression. Par contre, lorsque l'installation fonctionne en filtration, la vanne 14 est fermée et est exposée à la haute pression du rejet par la conduite 5.

L'unique vanne haute pression 14 n'est traversée que par un débit réduit et son coût s'en trouve réduit.

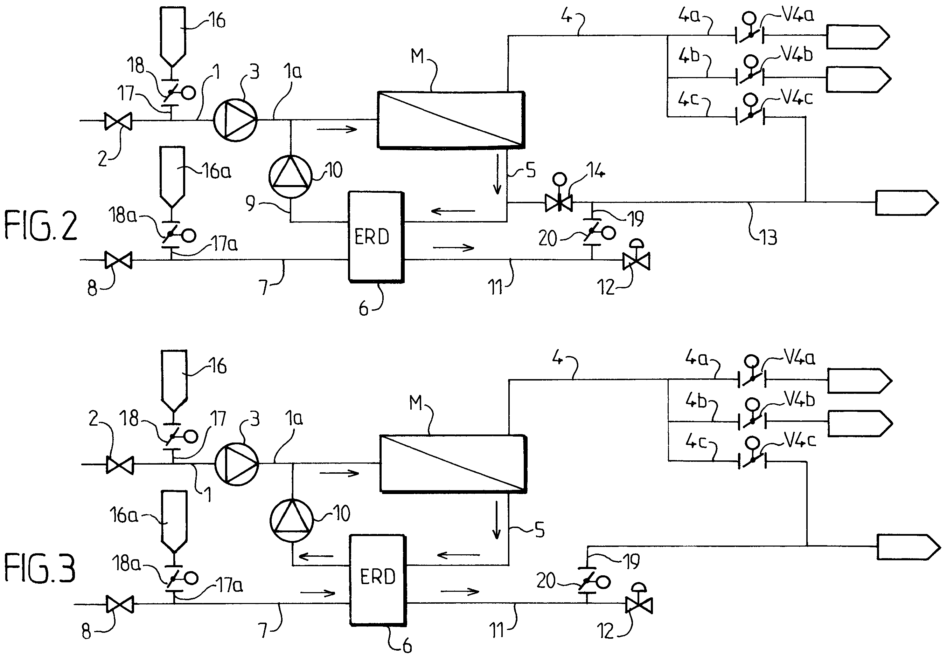

Une variante de l'installation de traitement selon l'invention est illustrée par le schéma de Fig. 2 sur lequel les éléments identiques à des éléments déjà décrits à propos de Fig. 1 sont désignés par les mêmes références sans que leur description soit reprise en détail.

Selon le procédé d'exploitation de l'installation de Fig. 2, lors du nettoyage, le système de récupération ERD 6 est mis en action et une seconde entrée de solution de nettoyage est assurée par la conduite 7 au niveau de l'entrée basse pression du système ERD 6. L'injection de solution de nettoyage dans la conduite 7, en aval de la vanne 8, est assurée soit par le même circuit de nettoyage que celui de la conduite 1 avec une dérivation (non représentée) de la conduite 17 raccordée à la conduite 7, soit par un circuit de nettoyage similaire comportant un dispositif d'alimentation 16a de solution de nettoyage, une conduite d'injection 17a reliée à la conduite 7 et une vanne basse pression 18a installée sur la conduite 17a. Une sortie de la solution basse pression par la conduite 11 se produit au même débit que dans la conduite 7. La conduite 11 est reliée à la conduite de soutirage 13, en aval de la vanne 14, par une conduite 19 munie d'une vanne basse pression 20. La conduite 19 est raccordée à la conduite 11 en amont de la vanne 12.

Le débit d'appoint fourni par la conduite 7 peut être égal au débit de la pompe de recirculation 10, ou à un débit différent.

Pour l'opération de nettoyage, les vannes 2, 4a, 4b, 8 et 12 sont fermées. Les vannes 18, 18a, 14, 20 et V4c sont ouvertes. La pompe 3 haute pression ne fonctionne pas tandis que la pompe de recirculation 10 est en action de même que le système de récupération 6.

La variante de Fig. 2 présente l'avantage de renouveler une fraction plus importante de la solution de nettoyage au contact de la membrane, si ce n'est un renouvellement total. Selon le type de récupérateur d'énergie 6, cette variante peut également être la seule possible à mettre en oeuvre.

Toujours selon l'exemple précédent d'un traitement de 20 000 m³/jour, avec une unité de membrane M constituée de 210 tubes de pression, le débit de solution de nettoyage injectée par la conduite 17 en amont de la pompe 3 serait de 600 m³/h, tandis que le débit injecté par la conduite 7 serait de 1200 m³/h. Le débit sortant par la conduite 11 serait également de 1200 m³/h, le débit évacué par la conduite 13 en amont de la vanne 14 serait de 400 m³/h, tandis que le débit par la sortie filtrat et la conduite 4 serait de 200 m³/h. Dans la conduite 13, en aval du branchement de la conduite 4c, le débit serait donc de 1800 m³/h. Au niveau de la pompe de recirculation 10, le débit serait de 1200 m³/h.

Fig. 3 est un schéma d'une autre variante d'installation de traitement selon l'invention. Les éléments identiques à des éléments déjà décrits à propos des figures précédentes sont désignés par les mêmes références numériques sans que leur description soit reprise en détail.

L'installation de Fig. 3 diffère de celle de Fig. 2 en ce que la vanne haute pression 14 et la conduite 13 branchée sur la conduite de rejet 5 sont supprimées

Lors de l'opération de nettoyage, selon Fig.3, le système récupérateur 6 fonctionne comme dans le cas de Fig. 2, ainsi que la pompe de recirculation 10, tandis que la pompe haute pression 3 est à l'arrêt.

La pression d'alimentation de la solution de nettoyage provenant du dispositif 16, en amont de la pompe 3, est ajustée pour que le débit de solution, qui traverse l'unité de membrane M soit égal au débit délivré par la conduite 17. Ce débit est évacué par la conduite 4c, la vanne V4c étant ouverte tandis que les vannes V4a et V4b sont fermées.

Selon l'exemple de réalisation envisagé, pour un train de membranes de filtration d'environ 20 000 m³/j, constitué de 210 tubes de pression, dont le système de récupération d'énergie est dimensionné pour 1200 m³/h, si le débit de solution de nettoyage est fixé par les constructeurs de membranes à 1800 m³/h :
- un système classique de nettoyage en place serait dimensionné pour 1800 m³/h, avec des tuyauteries et des vannes de pression ayant un diamètre de 500 mm ;
- selon l'invention, le système de nettoyage 16, 17, 18 serait dimensionné pour un débit de 600 m3/h, les vannes et tuyauteries ayant un diamètre de 300 mm.

En outre, une seule vanne haute pression 14 serait prévue, pour un débit réduit. En plus des économies sur les équipements, le volume de tuyauteries est réduit de plus de moitié, ce qui permet une réduction des volumes de solution de nettoyage.

L'invention concerne plus particulièrement les procédés et installations de traitement de filtration par osmose inverse ou nanofiltration avec système de récupération d'énergie isobarique.

## Revendications

1. Procédé d'exploitation d'une installation de traitement d'eau, en particulier pour dessalement d'eau de mer, cette installation comprenant :
- au moins une unité à membrane (M) comprenant plusieurs tubes de pression pour filtration par osmose inverse, ou par nanofiltration, une conduite d'arrivée (1,1a) d'eau à traiter, au moins une conduite de sortie (4) pour le perméat, et une conduite de rejet (5) pour le concentrat,
- au moins une pompe haute pression (3) sur la conduite d'arrivée,
- et un système de récupération d'énergie (6) comportant une première entrée d'eau à traiter, une première sortie d'eau à traiter pressurisée reliée, avec une pompe de recirculation (10), à la conduite d'arrivée (1a) en aval de la pompe haute pression (3), une deuxième entrée reliée à la conduite de rejet (5), et une deuxième sortie reliée à une conduite d'évacuation (11) de l'eau concentrée,
- un circuit (16, 17, 18) de solution de nettoyage comprenant un dispositif d'alimentation en solution de nettoyage (16, 16a),
- et un ensemble de vannes pour commander les opérations de filtration et les opérations de nettoyage,
le débit de solution de nettoyage passant dans la dite au moins une unité à membrane devant être au moins égal à une valeur Q prescrite pour un nettoyage de ladite au moins une unité à membrane (M), la valeur prescrite du débit de solution de nettoyage étant comprise entre 6 et 9 m3/h par tube de pression, **caractérisé en ce que** le nettoyage de ladite au moins une unité à membrane (M) comprend :
- une injection de la solution de nettoyage en amont de la pompe haute pression (3), selon un débit Q1 assuré par le dispositif d'alimentation en solution de nettoyage et inférieur à 0.5 fois la valeur prescrite Q,
- une recirculation de solution de nettoyage assurée par une recirculation de solution sortant par la conduite (5) de rejet de l'unité à membrane et traversant le système de récupération d'énergie (6) d'au moins le complément de débit (Q-Q1) de solution de nettoyage,
la pompe haute pression (3) étant à l'arrêt lors du nettoyage.

2. Procédé selon la revendication 1, **caractérisé en ce que**, pendant l'opération de nettoyage, le système de récupération d'énergie (6) est maintenu à l'arrêt, et une fraction du débit sortant par la conduite de rejet (5) est soutirée par une conduite (13), munie d'une vanne haute pression (14), branchée sur la conduite de rejet (5) de l'unité à membrane.

3. Procédé selon la revendication 1, **caractérisé en ce que**, pendant l'opération de nettoyage, le système de récupération d'énergie (6) fonctionne et reçoit, par une conduite (7) sur sa première entrée, un débit de solution de nettoyage, et fournit dans une conduite (11) reliée à sa deuxième sortie un débit identique, une fraction du débit sortant par la conduite de rejet (5) étant soutirée par une conduite de soutirage (13), munie d'une vanne haute pression (14), branchée sur la conduite de rejet (5) de l'unité à membrane, et la conduite (11) de la deuxième sortie du système de récupération d'énergie (6) est reliée par une conduite (19) munie d'une vanne (20) à ladite conduite de soutirage (13), en aval de la vanne haute pression (14).

4. Procédé selon la revendication 1, **caractérisé en ce que**, pendant l'opération de nettoyage, le système de récupération d'énergie (6) fonctionne et reçoit, sur sa première entrée, un débit de solution de nettoyage, et fournit sur sa deuxième sortie un débit identique, et la pression de solution de nettoyage délivrée par le dispositif d'alimentation (16) est ajustée pour que le débit de solution sortant par la conduite (4) reliée à la sortie perméat de l'unité à membrane soit sensiblement égal au débit de solution de nettoyage injecté par le dispositif d'alimentation (16) , le débit de solution sortant par la conduite de rejet (5) de l'unité à membrane étant entièrement délivré à la deuxième entrée du système de récupération d'énergie (6).

5. Installation de traitement d'eau, en particulier pour dessalement d'eau de mer, pour la mise en oeuvre du procédé selon la revendication 1, cette installation comprenant :
- au moins une unité à membrane (M) comprenant plusieurs tubes de pression pour filtration par osmose inverse, ou par nanofiltration, une conduite d'arrivée (1,1a) d'eau à traiter, au moins une conduite de sortie (4) pour le perméat, et une conduite de rejet (5) pour le concentrat,
- au moins une pompe haute pression (3) sur la conduite d'arrivée,
- un système de récupération d'énergie (6) comportant une première entrée d'eau à traiter, une première sortie d'eau à traiter pressurisée reliée, avec une pompe de recirculation (10), à la conduite d'arrivée (1a) en aval de la pompe haute pression (3), une deuxième entrée reliée à la conduite de rejet (5), et une deuxième sortie reliée à une conduite d'évacuation (11) de l'eau concentrée,
- un ensemble de vannes pour commander les opérations de filtration et les opérations de nettoyage,
- un circuit (16, 17, 18) de solution de nettoyage comprenant un dispositif d'alimentation (16) en solution de nettoyage, une conduite d'amenée (17) agencée pour transférer la solution de nettoyage à l'unité à membrane, la conduite d'amenée étant reliée en amont de la pompe haute pression (3), et équipée d'une vanne basse pression (18),
- une première conduite d'évacuation (4c) de solution de nettoyage reliée directement à la conduite de sortie pour le perméat, et équipée d'une vanne basse pression (V4c),
- une conduite de soutirage (13) reliée directement à la conduite de rejet (5) pour le soutirage d'une fraction de solution, cette conduite de soutirage étant équipée d'une vanne haute pression (14),
**caractérisée en ce que**:
- le circuit (16, 17, 18) de solution de nettoyage étant apte à effectuer une injection de la solution de nettoyage en amont de la pompe haute pression (3), selon un débit Q1 assuré par le dispositif d'alimentation en solution de nettoyage et inférieur à 0.5 fois la valeur prescrite Q, la valeur prescrite du débit de solution de nettoyage étant comprise entre 6 et 9 m3/h par tube de pression, et **en ce qu'**
- elle comprend une boucle de recirculation (5, 6, 9 et 10) étant apte à effectuer une recirculation de solution de nettoyage assurée par une recirculation de solution sortant par la conduite (5) de rejet de l'unité à membrane (M), et traversant le système de récupération d'énergie (6) d'au moins le complément de débit (Q-Q1) de solution de nettoyage, et une conduite (9) étant équipée de la pompe de recirculation (10), avec mise en mouvement par la pompe de recirculation (10).

6. Installation de traitement d'eau, en particulier pour dessalement d'eau de mer, selon la revendication 5, **caractérisée en ce que** l'installation comprend une conduite de liaison (19), munie d'une vanne basse pression (20), entre la conduite (11) reliée à la deuxième sortie du système de récupération d'énergie (6) et la conduite de soutirage (13), en aval de la vanne haute pression (14).

7. Installation de traitement d'eau, en particulier pour dessalement d'eau de mer, selon la revendication 5, **caractérisée en ce que** le dispositif d'alimentation en solution (16) comprend des moyens d'ajustement de la pression de solution à l'entrée de l'unité à membrane (M) à une valeur telle que le débit de solution sortant par la conduite (4) reliée à la sortie perméat de l'unité à membrane soit sensiblement égal au débit de solution de nettoyage injecté en amont de la pompe (3), le débit de solution sortant par le rejet de l'unité à membrane étant entièrement délivré à la deuxième entrée du système de récupération d'énergie.

## Patentansprüche

1. Verfahren zum Betreiben einer Wasserbehandlungsanlage, insbesondere einer Meerwasserentsalzungsanlage, wobei die Anlage aufweist:
- mindestens eine Membraneinheit (M) mit mehreren Druckrohren zur Filtration durch Umkehrosmose oder durch Nanofiltration, einer Zuführleitung (1, 1a) für zu behandelndes Wasser, mindestens einer Auslassleitung (4) für das Permeat, und einer Abführleitung (5) für das Konzentrat,
- mindestens eine Hochdruckpumpe (3) in der Zuführleitung,
- und ein Energierückgewinnungssystem (6) mit einem ersten Einlass für zu behandelndes Wasser, einem ersten Auslass für druckbeaufschlagtes zu behandelndes Wasser, der über eine Umwälzpumpe (10) mit der Zuführleitung (1a) stromabwärts der Hochdruckpumpe (3) verbunden ist, einem zweiten Einlass, der mit der Abführleitung (5) verbunden ist, und einem zweiten Auslass, der mit einer Ablassleitung (11) für konzentriertes Wasser verbunden ist,
- einen Reinigungslösungskreislauf (16, 17, 18) mit einer Reinigungsflüssigkeitszuführvorrichtung (16, 16a),
- und eine Anordnung von Ventilen zum Steuern der Filtrationsvorgänge und der Reinigungsvorgänge,
wobei die Durchflussmenge der Reinigungslösung, welche die mindestens eine Membraneinheit durchläuft, mindestens gleich einem für die Reinigung der mindestens einen Membraneinheit (M) vorgeschriebenen Wert Q sein muss, wobei der vorgeschriebene Wert der Durchflussmenge der Reinigungslösung zwischen 6 und 9 m³/h pro Druckrohr beträgt,
**dadurch gekennzeichnet, dass** das Reinigen der mindestens einen Membraneinheit (M) aufweist:
- ein Einspritzen der Reinigungslösung stromaufwärts der Hochdruckpumpe (3) gemäß einer Durchflussmenge Q1, welche durch die Reinigungsflüssigkeitszuführvorrichtung gewährleistet ist und geringer als das 0,5-fache des vorgeschriebenen Werts Q ist,
- eine durch eine Rezirkulation von Lösung, die über die Abführleitung (5) der Membraneinheit austritt und das Energierückgewinnungssystem (6) durchläuft, gewährleistete Reinigungslösungsrezirkulation mindestens des Komplements (Q-Q1) der Durchflussmenge der Reinigungslösung,
wobei die Hochdruckpumpe (3) während der Reinigung angehalten ist.

2. Verfahren nach Anspruch 1, **dadurch gekennzeichnet, dass** das Energierückgewinnungssystem (6) während des Reinigungsvorgangs angehalten bleibt und ein Teil der Durchflussmenge, die aus der Abführleitung (5) austritt, über eine mit einem Hochdruckventil (14) versehene Leitung (13) entnommen wird, welche von der Abführleitung (5) der Membraneinheit abzweigt.

3. Verfahren nach Anspruch 1, **dadurch gekennzeichnet, dass** das Energierückgewinnungssystem (6) während des Reinigungsvorgangs arbeitet und über eine Leitung (7) an ihrem ersten Einlass eine Durchflussmenge an Reinigungslösung empfängt und eine identische Durchflussmenge in eine mit ihrem zweiten Ausgang verbundene Leitung (11) ausgibt, wobei ein Teil der aus der Abführleitung (5) austretenden Durchflussmenge über eine mit einem Hochdruckventil (14) versehene Entnahmeleitung (13) entnommen wird, welche von der Abführleitung (5) der Membraneinheit abzweigt, und die Leitung (11) des zweiten Auslasses des Energierückgewinnungssystems (6) über eine mit einem Ventil (20) versehene Leitung (19) mit der Entnahmeleitung (13) stromabwärts des Hochdruckventils (14) verbunden ist.

4. Verfahren nach Anspruch 1, **dadurch gekennzeichnet, dass** das Energierückgewinnungssystem (6) während des Reinigungsvorgangs arbeitet und an seinem ersten Einlass eine Durchflussmenge an Reinigungslösung aufnimmt und an seinem zweiten Auslass eine identische Durchflussmenge ausgibt, und der von der Zuführvorrichtung (16) gelieferte Reinigungslösungsdruck eingestellt ist, so dass die Lösungsdurchflussmenge, die aus der Leitung (4), welche mit dem Permeatauslass der Membraneinheit verbunden ist, austritt, im Wesentlichen gleich der von der Zuführvorrichtung (16) eingespritzten Durchflussmenge der Reinigungslösung ist, wobei die aus der Abführleitung (5) der Membraneinheit austretende Durchflussmenge der Lösung vollständig an den zweiten Einlass des Energierückgewinnungssystems (6) geliefert wird.

5. Wasserbehandlungsanlage, insbesondere zur Meerwasserentsalzung, zur Durchführung des Verfahrens nach Anspruch 1, wobei die Anlage aufweist:
- mindestens eine Membraneinheit (M) mit mehreren Druckrohren zur Filtration durch Umkehrosmose oder durch Nanofiltration, einer Zuführleitung (1, 1a) für zu behandelndes Wasser, mindestens einer Auslassleitung (4) für das Permeat, und einer Abführleitung (5) für das Konzentrat,
- mindestens eine Hochdruckpumpe (3) in der Zuführleitung,
- ein Energierückgewinnungssystem (6) mit einem ersten Einlass für zu behandelndes Wasser, einem ersten Auslass für druckbeaufschlagtes zu behandelndes Wasser, der über eine Umwälzpumpe (10) mit der Zuführleitung (1a) stromabwärts der Hochdruckpumpe (3) verbunden ist, einem zweiten Einlass, der mit der Abführleitung (5) verbunden ist, und einem zweiten Auslass, der mit einer Ablassleitung (11) für konzentriertes Wasser verbunden ist,
- eine Anordnung von Ventilen zum Steuern der Filtrationsvorgänge und der Reinigungsvorgänge,
- einen Reinigungslösungskreislauf (16, 17, 18) mit einer Reinigungsflüssigkeitszuführvorrichtung (16), einer Zuführleitung (17), die zum Leiten der Reinigungslösung zu der Membraneinheit angeordnet ist, wobei die Zuführleitung stromaufwärts der Hochdruckpumpe (3) verbunden ist und mit einem Niederdruckventil (18) versehen ist,
- eine erste Reinigungslösungsablassleitung (4c), die unmittelbar mit der Auslassleitung für das Permeat verbunden ist und mit einem Niederdruckventil (V4C) versehen ist,
- eine Entnahmeleitung (13), die unmittelbar mit der Abführleitung (5) zur Entnahme eines Teils der Lösung verbunden ist, wobei diese Entnahmeleitung mit einem Hochdruckventil (14) versehen ist,
**dadurch gekennzeichnet, dass**
- der Reinigungslösungskreislauf (16, 17, 18) in der Lage ist, ein Einspritzen der Reinigungslösung stromaufwärts der Hochdruckpumpe (3) gemäß einer Durchflussmenge Q1, welche durch die Reinigungslösungszuführvorrichtung gewährleistet ist und geringer als das 0,5-fache des vorgeschriebenen Werts Q ist, durchzuführen, wobei der vorgeschriebene Wert der Durchflussmenge der Reinigungslösung zwischen 6 und 9 m³/h pro Druckrohr beträgt,
- sie eine Rezirkulationsschleife (5, 6, 9 und 10), welche in der Lage ist, eine durch eine Rezirkulation von Lösung, die über die Abführleitung (5) der Membraneinheit (M) austritt und das Energierückgewinnungssystem (6) durchläuft, gewährleistete Reinigungslösungsrezirkulation mindestens des Komplements (Q-Q1) der Durchflussmenge der Reinigungslösung durchzuführen, und eine mit der Rezirkulationspumpe (10) versehene Leitung (9) aufweist, wobei die Bewegung durch die Rezirkulationspumpe (10) erfolgt.

6. Wasserbehandlungsanlage, insbesondere zur Meerwasserentsalzung, nach Anspruch 5, **dadurch gekennzeichnet, dass** die Anlage stromabwärts des Hochdruckventils (14) eine mit einem Niederdruckventil (20) versehene Verbindungsleitung (19) zwischen der mit dem zweiten Auslass des Energierückgewinnungssystems (6) verbundenen Leitung (11) und der Entnahmeleitung (13) aufweist.

7. Wasserbehandlungsanlage, insbesondere zur Meerwasserentsalzung, nach Anspruch 5, **dadurch gekennzeichnet, dass** die Lösungszuführvorrichtung (16) am Einlass der Membraneinheit (M) Einrichtungen zum Einstellen des Lösungsdrucks auf einen derartigen Wert aufweist, dass die aus der mit dem Permeatauslass der Membraneinheit verbundenen Leitung (4) austretende Durchflussmenge im Wesentlichen gleich der stromaufwärts der Pumpe (3) eingespritzten Durchflussmenge der Reinigungslösung ist, wobei die aus dem Abfluss der Membraneinheit austretende Durchflussmenge der Lösung vollständig dem zweiten Einlass des Energierückgewinnungssystems zugeführt wird.

## Claims

1. A method for operating a water treatment facility, in particular for sea water desalination, this facility comprising:
- at least one membrane unit (M) comprising several pressure tubes for filtration by reverse osmosis, or by nanofiltration, an intake pipe (1, 1a) for water to be treated, at least one outlet pipe (4) for the permeate, and a discharge pipe (5) for the concentrate,
- at least one high pressure pump (3) on the intake pipe,
- and an energy recovery system (6) including a first inlet of water to be treated, a first pressurised outlet of water to be treated connected, with a recirculation pump (10), to the intake pipe (1a) downstream of the high pressure pump (3), a second inlet connected to the discharge pipe (5), and a second outlet connected to a drainage pipe (11) for the concentrated water,
- a cleaning solution circuit (16, 17, 18) comprising a cleaning solution supply device (16, 16a),
- and a set of valves for controlling the filtration operations and the cleaning operations,
the flow rate of cleaning solution passing through said at least one membrane unit having to be at least equal to a prescribed value Q for cleaning said at least one membrane unit (M), the prescribed value of the flow rate of cleaning solution being of between 6 and 9 m³/h per pressure tube, **characterised in that** cleaning said at least one membrane unit (M) comprises:
- injecting the cleaning solution upstream of the high pressure pump (3), at a flow rate Q1 provided by the cleaning solution supply device and less than 0.5 times the prescribed value Q,
- recirculating the cleaning solution provided by recirculating solution exiting through the discharge pipe (5) of the membrane unit and flowing through the energy recovery system (6) by at least the additional flow rate (Q-Q1) of cleaning solution,
the high pressure pump (3) being stopped during cleaning.

2. The method according to claim 1, **characterised in that**, during the cleaning operation, the energy recovery system (6) is kept stopped, and a fraction of the flow rate exiting through the discharge pipe (5) is drawn off by a pipe (13), fitted with a high pressure valve (14), connected to the discharge pipe (5) of the membrane unit.

3. The method according to claim 1, **characterised in that**, during the cleaning operation, the energy recovery system (6) operates and receives, through a pipe (7) on its first inlet, a flow rate of cleaning solution, and provides an identical flow rate into a pipe (11) connected to its second outlet, a fraction of the flow rate exiting through the discharge pipe (5) being drawn off by a draw off pipe (13), fitted with a high pressure valve (14), connected to the discharge pipe (5) of the membrane unit, and the pipe (11) of the second outlet of the energy recovery system (6) is connected through a pipe (19) fitted with a valve (20) to said draw off pipe (13), downstream of the high pressure valve (14).

4. The method according to claim 1, **characterised in that**, during the cleaning operation, the energy recovery system (6) operates and receives, on its first inlet, a flow rate of cleaning solution, and provides an identical flow rate on its second outlet, and the cleaning solution pressure delivered by the supply device (16) is adjusted for the flow rate of solution exiting through the pipe (4) connected to the permeate outlet of the membrane unit to be substantially equal to the flow rate of cleaning solution injected by the supply device (16), the flow rate of solution exiting through the discharge pipe (5) of the membrane unit being entirely delivered to the second inlet of the energy recovery system (6).

5. A water treatment facility, in particular for sea water desalination, for implementing the method according to claim 1, this facility comprising:
- at least one membrane unit (M) comprising several pressure tubes for filtration by reverse osmosis, or by nanofiltration, an intake pipe (1, 1a) for water to be treated, at least one outlet pipe (4) for the permeate, and a discharge pipe (5) for the concentrate,
- at least one high pressure pump (3) on the intake pipe,
- an energy recovery system (6) including a first inlet of water to be treated, a first pressurised outlet of water to be treated connected, with a recirculation pump (10), to the intake pipe (1a) downstream of the high pressure pump (3), a second inlet connected to the discharge pipe (5), and a second outlet connected to a drainage pipe (11) for the concentrated water,
- a set of valves for controlling the filtration operations and the cleaning operations,
- a cleaning solution circuit (16, 17, 18) comprising a cleaning solution supply device (16), a feed pipe (17) arranged to transfer the cleaning solution to the membrane unit, the feed pipe being connected upstream of the high pressure pump (3), and equipped with a low pressure valve (18),
- a first cleaning solution draining pipe (4c) directly connected to the outlet pipe for the permeate, and equipped with a low pressure valve (V4c),
- a draw off pipe (13) directly connected to the discharge pipe (5) for drawing off a fraction of solution, this draw off pipe being equipped with a high pressure valve (14),
**characterised in that**:
- the cleaning solution circuit (16, 17, 18) being capable of performing injection of the cleaning solution upstream of the high pressure pump (3), at a flow rate Q1 provided by the cleaning solution supply device and less than 0.5 times the prescribed value Q, the prescribed value of the flow rate of cleaning solution being between 6 and 9 m³/h per pressure tube, and **in that**
- it comprises a recirculation loop (5, 6, 9 and 10) being capable of performing recirculation of cleaning solution provided by a recirculation of solution exiting through the discharge pipe (5) of the membrane unit (M), and flowing through the energy recovery system (6) by at least the additional flow rate (Q-Q1) of cleaning solution, with moving by the recirculation pump (10) and a pipe (9) being equipped with the recirculation pump (10), with setting in motion by the recirculation pump.

6. The water treatment facility, in particular for sea water desalination, according to claim 5, **characterised in that** the facility comprises a connection pipe (19), fitted with a low pressure valve (20), between the pipe (11) connected to the second outlet of the energy recovery system (6) and the draw off pipe (13), downstream of the high pressure valve (14).

7. The water treatment facility, in particular for sea water desalination, according to claim 5, **characterised in that** the solution supply device (16) comprises means for adjusting the solution pressure at the inlet of the membrane unit (M) to a value such that the flow rate of solution exiting through the pipe (4) connected to the permeate outlet of the membrane unit is substantially equal to the flow rate of cleaning solution injected upstream of the pump (3), the flow rate of solution exiting through discharge from the membrane unit being entirely delivered to the second inlet of the energy recovery system.
